# EUROPEAN PATENT SPECIFICATION

(11) **EP 4 398 400 B1**
(45) Date of publication and mention of the grant of the patent: **15.04.2026**
(21) Application number: 22933967.6
(22) Date of filing: 28.03.2022
(51) Int. Cl.: H01M 50/375, H01M 50/102, H01M 50/342, H01M 50/107, H01M 50/30, H01M 10/04, H01M 50/133, H01M 50/152

(54) **HOUSING, BATTERY CELL, BATTERY, AND ELECTRICAL DEVICE**
GEHÄUSE, BATTERIEZELLE, BATTERIE UND ELEKTRISCHE VORRICHTUNG
BOÎTIER, ÉLÉMENT DE BATTERIE, BATTERIE ET DISPOSITIF ÉLECTRIQUE

(43) Date of publication of application: 10.07.2024
(73) Proprietor: Contemporary Amperex Technology (Hong Kong) Limited, Central, Central And Western District (HK)
(72) Inventor: CHEN, Xiaobo, Ningde, Fujian 352100 (CN); BAI, Jingfeng, Ningde, Fujian 352100 (CN); GU, Mingguang, Ningde, Fujian 352100 (CN)
(74) Representative: Rowlands, Stuart Michael
(86) International application number: PCT/CN2022/083483
(87) International publication number: WO 2023/184110

(56) References cited:
- CN-U- 211 017 217
- CN-U- 211 017 217
- CN-U- 211 150 600
- CN-U- 214 227 081
- CN-U- 215 989 100
- CN-U- 215 989 100
- CN-U- 215 989 102
- CN-U- 215 989 104
- CN-U- 215 989 104
- US-A1- 2012 040 213
- US-A1- 2015 280 191
- US-A1- 2021 242 529

## Description

### Technical Field

The present application relates to the field of battery technology, and in particular, to a shell, a battery cell, a battery, and an electrical device.

### Background Art

With the development of new energy technology, batteries are increasingly widely used, such as in mobile phones, notebook computers, scooters, electric vehicles, electric aircraft, electric boats, electric toy cars, electric toy boats, electric toy planes, and electric tools.

As energy storage elements, battery cells generally output electrical energy through chemical reactions between an electrode assembly and an electrolyte. To improve the safety of batteries, a pressure relief mechanism is generally disposed in the battery cell. In battery technology, both the safety and service life of the battery cells are required to be considered. Therefore, how to prolong the service life of a battery cell is an urgent problem to be solved in the battery technology.

Document CN 215 989 100 U discloses a battery cell having a shell presenting a pressure relief structure with a plurality of grooves formed at intervals in the circumferential direction of the shell body.

### Summary

Embodiments of the present application provide a shell, a battery cell, a battery, and an electrical device, where the service life of the battery cell can be effectively prolonged.

In a first aspect, an embodiment of the present application provides a shell for accommodating an electrode assembly, with the shell including a circumferential wall and a groove group, where the circumferential wall is configured for enclosing the electrode assembly; the groove group includes a plurality of first grooves disposed on the circumferential wall in a circumferential direction of the circumferential wall, where the circumferential wall is configured to crack along the first grooves when pressure or temperature inside the shell reaches a threshold to relieve the pressure inside the shell; and the groove group further includes a plurality of second grooves disposed on the circumferential wall in the circumferential direction, the second grooves are alternated with the first grooves in the circumferential direction, and a residual thickness of the circumferential wall at the second groove is greater than that of the circumferential wall at the first groove.

In the foregoing technical solution, the second grooves alternated with the first grooves are disposed on the circumferential wall, the residual thickness of the circumferential wall at the second groove is greater than the residual thickness of the circumferential wall at the first groove, the damage-resistance of the circumferential wall at the second grooves is greater than that of the circumferential wall at the first grooves, and when pressure or temperature inside the shell reaches the threshold, the circumferential wall will crack along the first grooves to implement pressure relief. In this case, the circumferential wall does not crack along the second grooves, so the second grooves can balance deformation of the circumferential wall during formation of the first grooves, which makes the shape of the circumferential wall more regular, improves the assembly quality of the battery cell, and prolongs the service life of a battery cell accordingly.

In some embodiments, a depth of the second groove is less than that of the first groove, so that the residual thickness of the circumferential wall at the second groove is greater than that of the circumferential wall at the first groove. The depth of the second groove is less than that of the first groove, so that the residual thickness of the circumferential wall at the second groove is greater than that of the circumferential wall at the first groove in a simple implementation manner.

In some embodiments, a width of the first groove is less than that of the second groove. The first groove is narrow and deep, and the second groove is wide and shallow, resulting in a substantially consistent amount of material removal when the first groove and the second groove are formed on the circumferential wall, so that the stress on the circumferential wall is similar when the first groove and the second groove are formed, the deformation of the circumferential wall is reduced, the shape of the circumferential wall is more regular, and the assembly quality of the battery cell is improved.

In some embodiments, a difference between the residual thickness of the circumferential wall at the second groove and the residual thickness of the circumferential wall at the first groove is not less than 0.01 mm. A too small difference between the residual thickness of the circumferential wall at the second groove and the residual thickness of the circumferential wall at the first groove may cause simultaneous pressure relief of the circumferential wall at the first groove and the second groove. Therefore, the difference between the residual thickness of the circumferential wall at the second groove and the residual thickness of the circumferential wall at the first groove is set within a reasonable range to reduce the risk of simultaneous pressure relief by the circumferential wall at the first groove and the second groove.

In some embodiments, in the groove group, the total number of the first grooves and the second grooves is N, and an angle between the adjacent first groove and second groove is 360°/N. The first grooves and the second grooves are uniformly arranged on the circumferential wall, so that the shape of the circumferential wall is more regular to improve the assembly quality of the battery cell.

In some embodiments, the first groove and/or the second groove are disposed on an outer surface of the circumferential wall. This reduces the difficulty in forming the first groove and/or the second groove.

In some embodiments, the circumferential wall has a pressure relief portion, the first groove defines the pressure relief portion, and the pressure relief portion is configured to open with the first groove as a boundary when the pressure or temperature inside the shell reaches the threshold, so as to relieve the pressure inside the shell. When the pressure or temperature inside the shell reaches the threshold, the pressure relief portion will open with the first groove as the boundary, an opening portion will be formed at a position corresponding to the pressure relief portion on the circumferential wall, and emissions inside the shell will be discharged through the opening portion, with a large pressure relief area, whereby the emissions can be quickly discharged out of the shell to improve the pressure relief rate.

In some embodiments, the first groove is an unclosed groove with a distance between two ends. In this case, when the pressure or temperature inside the shell reaches the threshold, the pressure relief portion will open outward in a flipping form. After opening, the pressure relief portion is still partially connected to other portions of the circumferential wall except the pressure relief portion, so that the pressure relief portion will not detach and fly out due to the quick discharge of the emissions.

In some embodiments, the first groove includes a first groove portion, a second groove portion and a third groove portion, the first groove portion and the third groove portion are opposite in an extension direction of the circumferential wall, and the first groove portion, the second groove portion and the third groove portion are connected sequentially to define the pressure relief portion. The structure of the first groove is simple. When the pressure or temperature inside the shell reaches the threshold, the circumferential wall cracks along the second groove portion and then cracks along the first groove portion and the third groove portion, so that the pressure relief portion gradually flips and opens outward, with a large pressure relief area.

In some embodiments, the second groove portion includes a straight groove segment extending along a straight trajectory, and the first groove portion is opposite to the third groove portion in the extension direction of the straight groove segment; and a length of the straight groove segment is L, and a residual thickness of the circumferential wall at the straight groove segment is H, satisfying: 1/5*H+1/2*L>0.55. In this case, the shell meets pressure relief requirements, and magnitudes of H and L may be set according to actual process situations.

In some embodiments, the second groove portion further includes a first arc chamfer segment and a second arc chamfer segment, the first arc chamfer segment is configured to connect the first groove portion and the straight groove segment, and the second arc chamfer segment is configured to connect the second groove portion and the straight groove segment. The straight groove segment can transition to the first groove portion more smoothly by means of the first arc chamfer segment, and the straight groove segment can transition to the third groove portion more smoothly by means of the second arc chamfer segment, so that the pressure relief portion flips and opens outward more smoothly.

In some embodiments, the first groove is a closed groove with two connected ends. In this case, when the pressure or temperature inside the shell reaches the threshold, the pressure relief portion will completely detach from other portions of the circumferential wall except the pressure relief portion, and will have a larger pressure relief area.

In some embodiments, a contour of the first groove is circular or elliptical. The first groove has a simple structure and is easy to form.

In some embodiments, a contour of the second groove is in the same shape as that of the first groove. The formation of the second groove can better balance the deformation of the circumferential wall during the formation of the first groove, which makes the shape of the circumferential wall more regular.

In some embodiments, a plurality of groove groups are disposed on the circumferential wall, and the plurality of groove groups are arranged in the extension direction of the circumferential wall. The plurality of groove groups are disposed on the circumferential wall to improve the pressure relief capacity of the shell, so that the shell can relieve pressure from more positions when its internal pressure or temperature reaches the threshold to increase the pressure relief rate.

In some embodiments, the circumferential wall is cylindrical. The second grooves are disposed on the cylindrical circumferential wall, and the second grooves are alternated with the first grooves, which can improve the roundness of the circumferential wall, ensure size requirements of the electrode assembly entering the shell, and improve the assembly quality of the battery cell accordingly.

In some embodiments, the shell further includes a bottom wall located at one end of the circumferential wall and integrally formed with the circumferential wall, with the circumferential wall forming an opening at an end opposite to the bottom wall; and an end cover configured for covering the opening. The structure of the shell is simple, and it is easy to accommodate the electrode assembly inside the shell to assemble the battery cell.

In a second aspect, an embodiment of the present application provides a battery cell, including an electrode assembly and the shell provided by any of the embodiments of the first aspect, where the shell is configured for accommodating the electrode assembly.

In a third aspect, an embodiment of the present application provides a battery, including a box and the battery cell provided by any of the embodiments of the second aspect, where the box is configured for accommodating the battery cell.

In a fourth aspect, an embodiment of the present application provides an electrical device, including the battery provided by any of the embodiments of the third aspect.

In a fifth aspect, an embodiment of the present application provides a manufacturing method for a shell, the manufacturing method including: providing a shell, the shell having a circumferential wall; and machining a groove group on the circumferential wall, where the groove group includes a plurality of first grooves and a plurality of second grooves disposed on the circumferential wall in a circumferential direction of the circumferential wall, the second grooves are alternated with the first grooves in the circumferential direction, a residual thickness of the circumferential wall at the second groove is greater than a residual thickness of the circumferential wall at the first groove, and the circumferential wall is configured to crack along the first groove when pressure or temperature inside the shell reaches a threshold to relieve the pressure inside the shell.

In some embodiments, the machining a groove group on the circumferential wall includes: alternately punching the first grooves and the second grooves on the circumferential wall.

In a sixth aspect, an embodiment of the present application further provides a manufacturing device for a shell, the manufacturing device including a provision apparatus and a machining apparatus, where the provision apparatus is configured to provide a shell, the shell having a circumferential wall; and the machining apparatus is configured to machine a groove group on the circumferential wall, where the groove group includes a plurality of first grooves and a plurality of second grooves disposed on the circumferential wall in a circumferential direction of the circumferential wall, the second grooves are alternated with the first grooves in the circumferential direction, a residual thickness of the circumferential wall at the second groove is greater than a residual thickness of the circumferential wall at the first groove, and the circumferential wall is configured to crack along the first groove when pressure or temperature inside the shell reaches a threshold to relieve the pressure inside the shell.

### Brief Description of Drawings

FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of a shell shown in FIG. 3;
FIG. 5 is a cross-sectional view taken along line A-A on the shell shown in FIG. 4;
FIG. 6 is a partially enlarged view of position B of the shell shown in FIG. 4;
FIG. 7 is a cross-sectional view taken along line C-C on the shell shown in FIG. 6;
FIG. 8 is a schematic structural diagram of a shell according to other embodiments of the present application;
FIG. 9 is a schematic structural diagram of a shell according to still other embodiments of the present application;
FIG. 10 is a flowchart of a manufacturing method for a shell according to some embodiments of the present application; and
FIG. 11 is a schematic block diagram of a manufacturing device for a shell according to some embodiments of the present application.

Reference numerals: 10 - box; 11 - first portion; 12 - second portion; 20 - battery cell; 21 - shell; 211 - circumferential wall; 2111 - pressure relief portion; 212 - end cover; 2121 - electrode terminal; 213 - bottom wall; 214 - groove group; 2141 - first groove; 2141a - first groove portion; 2141b - third groove portion; 2141c - straight groove segment; 2141d - first arc chamfer segment; 2141f - second arc chamfer segment; 2142 - second groove; 22 - electrode assembly; 221 - positive tab; 222 - negative tab; 23 - current collecting component; 100 - battery; 200 - controller; 300 - motor; 1000 - vehicle; 2000 - manufacturing device; 2100 - provision apparatus; 2200 - machining apparatus; Z - extension direction; X - circumferential direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. It will be apparent that the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase appearing in various places of the description does not necessarily refer to the same embodiment, nor is an independent or alternative embodiment mutually exclusive with other embodiments.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box configured for packaging one or more battery cells. The box may prevent liquid or other foreign matters from affecting charging or discharging of the battery cells.

The battery cell includes an electrode assembly and an electrolyte, and the electrode assembly is composed of a positive electrode sheet, a negative electrode sheet and a separator. The battery cell mainly relies on movement of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive tab. In an example of a lithium-ion battery, a material for the positive electrode current collector may be aluminum, and the positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative tab. A material for the negative electrode current collector may be copper, and the negative electrode active material may be carbon, silicon, or the like. In order to ensure that no fusing occurs when high current passes through, there is a plurality of positive tabs which are stacked together, and there is a plurality of negative tabs which are stacked together. A material for the separator may be polypropylene (PP), polyethylene (PE), or the like. Moreover, the electrode assembly may be of a wound structure or a stacked structure, and the embodiments of the present application are not limited thereto.

The development of battery technology should consider many design factors simultaneously, such as energy density, cycle life, discharge capacity, charge and discharge rate, and other performance parameters. In addition, safety of the battery should also be considered.

In order to ensure the safety of a battery cell, a pressure relief mechanism is generally disposed inside the battery cell to relieve pressure inside the battery cell, so as to reduce risks of explosion and fire of the battery cell.

The inventor noticed, even if the pressure relief mechanism is disposed inside the battery cell, the risks of explosion and fire of the battery cell still often occur. As the conventional pressure relief mechanism is generally disposed at an end portion of a shell of the battery cell, after a plurality of battery cells are stacked together, the pressure relief mechanism on the end portion of the shell will be blocked by other battery cells, resulting in untimely pressure relief and safety accidents.

To improve the pressure relief rate of the shell, a plurality of pressure relief grooves may be disposed on a circumferential wall of the shell. When the pressure or temperature inside the shell reaches a threshold, the circumferential wall of the shell cracks along the pressure relief grooves to relieve the pressure inside the shell. However, the inventor found, after the pressure relief grooves are disposed on the circumferential wall of the shell, the shell will deform to some extent to affect entry of the electrode assembly into the shell, which reduces assembly quality of the battery and affects the service life of the battery cell.

In view of this, an embodiment of the present application provides a shell, which includes a circumferential wall and a groove group. The groove group includes a plurality of first grooves disposed on the circumferential wall in a circumferential direction of the circumferential wall, and the circumferential wall is configured to crack along the first grooves when pressure or temperature inside the shell reaches a threshold to relieve the pressure inside the shell. The groove group further includes a plurality of second grooves disposed on the circumferential wall in the circumferential direction of the circumferential wall, the second grooves are alternated with the first grooves in the circumferential direction of the circumferential wall, and a residual thickness of the circumferential wall at the second groove is greater than that of the circumferential wall at the first groove.

In such a battery cell, the second grooves alternated with the first grooves that play a pressure relief role are disposed on the circumferential wall, and can balance the deformation of the circumferential wall during the formation of the first grooves, so that the shape of the circumferential wall is more regular, the assembly quality of the battery cell is improved, and the service life of the battery cell is prolonged accordingly.

The technical solution described in this embodiment of the present application is applicable to batteries and electrical devices using batteries.

The electrical devices may be vehicles, mobile phones, portable devices, notebook computers, ships, spacecrafts, electric toys, electric tools, and the like. The vehicles may be oil-fueled vehicles, gas-fueled vehicles, or new energy vehicles, and the new energy vehicles may be battery electric vehicles, hybrid electric vehicles, extended range vehicles, or the like; the spacecrafts include airplanes, rockets, space shuttles, spaceships, and the like; the electric toys include fixed or mobile electric toys, such as game consoles, electric car toys, electric boat toys, and electric plane toys; and the electric tools include electric metal cutting tools, electric grinding tools, electric assembly tools, and railway electric tools, such as electric drills, electric grinders, electric wrenches, electric screwdrivers, electric hammers, electric impact drills, concrete vibrators, and electric planers. The embodiments of the present application do not impose special limitations on the foregoing electrical devices.

For convenient description, the following embodiments are described by an example of a vehicle as an electrical device.

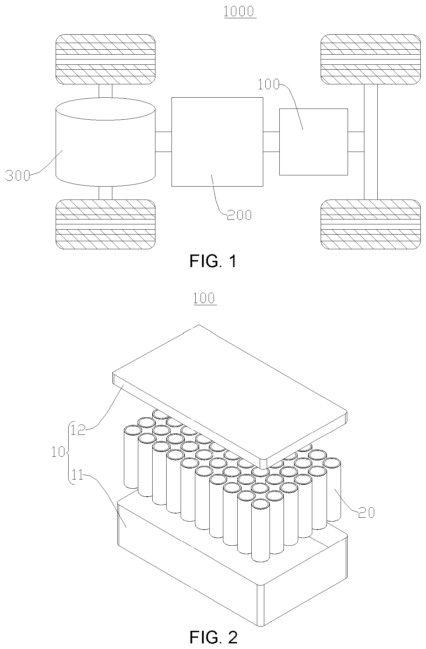

Refer to FIG. 1. FIG. 1 is a schematic structural diagram of a vehicle 1000 according to some embodiments of the present application. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000.

The vehicle 1000 may further include a controller 200 and a motor 300. The controller 200 is configured to control the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 according to some embodiments of the present application. The battery 100 includes a box 10 and battery cells 20, where the box 10 is configured for accommodating the battery cells 20.

The box 10 is a component that accommodates the battery cells 20, the box 10 provides a space for the battery cells 20, and the box 10 may have various structures. In some embodiments, the box 10 may include a first portion 11 and a second portion 12, and the first portion 11 and the second portion 12 cover each other to confine the space for accommodating the battery cells 20. The first portion 11 and the second portion 12 may be in various shapes, such as cuboid or cylindrical. The first portion 11 may be of a hollow structure with an open side, the second portion 12 may also be of a hollow structure with an open side, and the open side of the second portion 12 covers the open side of the first portion 11 to form the box 10 with the accommodating space. Alternatively, the first portion 11 is of a hollow structure with an open side, the second portion 12 is of a plate-like structure, and the second portion 12 covers the open side of the first portion 11 to form the box 10 with the accommodating space. The first portion 11 and the second portion 12 may be sealed through a sealing element, which may be a sealing ring, a sealant, or the like.

There may be one or more battery cells 20 in the battery 100. If there is a plurality of battery cells 20, the plurality of battery cells 20 may be in series connection, parallel connection or series-parallel connection. The series-parallel connection refers to a combination of series connection and parallel connection in the plurality of battery cells 20. The plurality of battery cells 20 may first be connected in series, in parallel or in series and parallel to form a battery module, and then a plurality of battery modules may be connected in series, in parallel, or in series and parallel to form a whole accommodated in the box 10. Alternatively, all the battery cells 20 may be directly connected in series, in parallel, or in series and parallel together, and then the whole formed by all the battery cells 20 is accommodated in the box 10.

In some embodiments, the battery 100 may further include a current collecting component, and the plurality of battery cells 20 may be electrically connected through the current collecting component to implement the series, parallel, or series-parallel connection of the plurality of battery cells 20. The current collecting component may be a metal conductor, such as copper, iron, aluminum, stainless steel, or aluminum alloy.

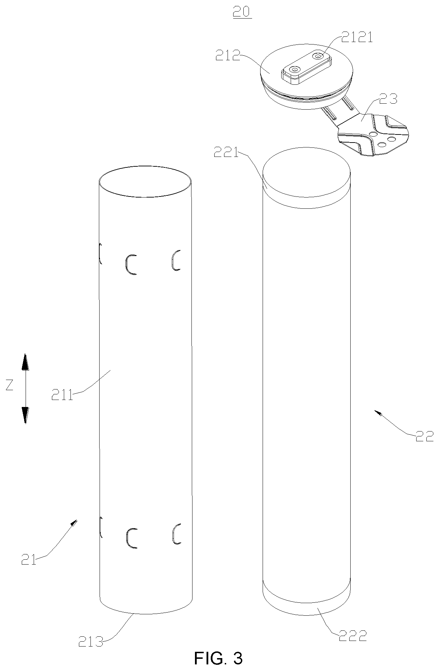

Refer to FIG. 3. FIG. 3 is an exploded view of a battery cell 20 according to some embodiments of the present application. The battery cell 20 includes a shell 21 and an electrode assembly 22, where the electrode assembly 22 is accommodated within the shell 21.

The shell 21 is a component that accommodates the electrode assembly 22. The shell 21 may be in various shapes, such as cylindrical or cuboid. In some embodiments, the shell 21 may include a circumferential wall 211 and two end covers 212, the circumferential wall 211 forms two openings at two ends in its extension direction Z, the two end covers 212 are configured to cover the two openings of the circumferential wall 211 separately, so that a closed space for accommodating the electrode assembly, 22, an electrolyte, and the like is formed inside the shell 21. In other embodiments, as shown in FIG. 3, the shell 21 may include a circumferential wall 211, an end cover 212, and a bottom wall 213, where the bottom wall 213 is located at one end of the circumferential wall 211 and integrally formed with the circumferential wall 211, and the circumferential wall 211 forms an opening at an end opposite to the bottom wall 213. The end cover 212 is configured for covering the opening of the circumferential wall 211, so that a closed space for accommodating the electrode assembly 22, an electrolyte, and the like is formed inside the shell 21.

The electrode assembly 22 is a component that undergoes electrochemical reactions in the battery cell 20. The electrode assembly 22 may be cylindrical, cuboid, or the like. If the electrode assembly 22 is cylindrical, the shell 21 may also be cylindrical; and if the electrode assembly 22 is cuboid, the shell 21 may also be cuboid.

The electrode assembly 22 may include a positive electrode sheet, a negative electrode sheet, and a separator. The electrode assembly 22 may be of a wound structure formed by winding the positive electrode sheet, the separator, and the negative electrode sheet, or a stacked structure formed by stacking the positive electrode sheet, the separator, and the negative electrode sheet. The electrode assembly 22 has tabs, including a positive tab 221 and a negative tab 222. The positive tab 221 may be a portion not coated with a positive electrode active material layer on the positive electrode sheet, and the negative tab 222 may be a portion not coated with a negative electrode active material layer on the negative electrode sheet.

The shell 21 may be provided with an electrode terminal 2121, the electrode terminal 2121 is electrically connected to a tab of the electrode assembly 22 to output electrical energy of the battery cell 20 through the electrode terminal 2121. The electrode terminal 2121 may be directly connected to the tab, for example, the electrode terminal 2121 is directly welded to the tab; or the electrode terminal 2121 may be indirectly connected to the tab, for example, the electrode terminal 2121 is indirectly connected to the tab through a current collecting member 23.

In the embodiment where the shell 21 has two end covers 212, an electrode terminal 2121 may be disposed on each of the two end covers 212, the electrode terminal 2121 on one end cover 212 may be indirectly connected to the positive tab 221 through a current collecting member 23, and the electrode terminal 2121 on the other end cover 212 may be indirectly connected to the negative tab 222 through another current collecting member 23. As shown in FIG. 3, in the embodiment where the shell 21 has only one end cover 212, an electrode terminal 2121 is disposed on the end cover 212, the electrode terminal 2121 may be indirectly connected to the positive tab 221 through a current collecting member 23, and the bottom wall 213 of the shell 21 is directly welded to the negative tab 222.

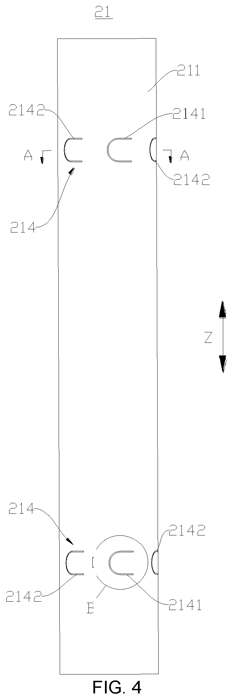

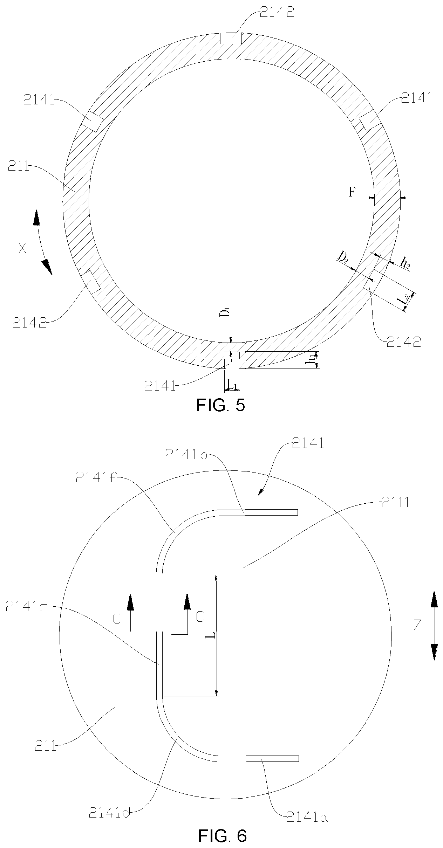

Refer to FIGs. 4 and 5, where FIG. 4 is a schematic structural diagram of the shell 21 shown in FIG. 3; and FIG. 5 is a cross-sectional view taken along line A-A on the shell 21 shown in FIG. 4. An embodiment of the present application provides a shell 21 configured for accommodating an electrode assembly 22. The shell 21 includes a circumferential wall 211 and a groove group 214. The circumferential wall 211 is configured for enclosing the electrode assembly 22. The groove group 214 includes a plurality of first grooves 2141 disposed on the circumferential wall 211 in a circumferential direction X of the circumferential wall 211, and the circumferential wall 211 is configured to crack along the first grooves 2141 when pressure or temperature inside the shell 21 reaches a threshold to relieve the pressure inside the shell 21. The groove group 214 further includes a plurality of second grooves 2142 disposed on the circumferential wall 211 in the circumferential direction X of the circumferential wall 211, the second grooves 2142 are alternated with the first grooves 2141 in the circumferential direction X of the circumferential wall 211, and a residual thickness D₂ of the circumferential wall 211 at the second groove 2142 is greater than a residual thickness D₁ of the circumferential wall 211 at the first groove 2141.

The circumferential wall 211 is a main portion of the shell 21 that extends in a length direction. After the electrode assembly 22 is accommodated in the shell 21, the circumferential wall 211 will enclose the electrode assembly 22. The circumferential wall 211 may be in various shapes, such as cylindrical or cuboid.

The first groove 2141 and the second groove 2142 may be formed on the circumferential wall 211 in various ways, such as stamping or milling. The first groove 2141 may be disposed on an outer surface of the circumferential wall 211 or on an inner surface of the circumferential wall 211; and the second groove 2142 may be disposed on the outer surface of the circumferential wall 211 or on the inner surface of the circumferential wall 211. Contours of the first groove 2141 and the second groove 2142 may be in various shapes, such as circular, elliptical, U-shaped, C-shaped, or straight. The contours of the first groove 2141 and the second groove 2142 may be in the same shape, such as U-shaped; or the contours of the first groove 2141 and the second groove 2142 may be in different shapes, for example, the contour of the first groove 2141 is circular, and the contour of the second groove 2142 is elliptical.

In the groove group 214, there may be two, three or more first grooves 2141 and two, three or more second grooves 2142, and the numbers of the first grooves 2141 and the second grooves 2142 may be odd or even. The second grooves 2142 and the first grooves 2141 are alternated in the circumferential direction X of the circumferential wall 211. It may be understood that, in the groove group 214, the number of the second grooves 2142 is equal to the number of the first grooves 2141, and a second groove 2142 is disposed between every two adjacent first grooves 2141 in the circumferential direction X of the circumferential wall 211. The first grooves 2141 and the second grooves 2142 in the groove group 214 are at three positions separately, and the arrangement of the six grooves in the groove group 214 in the circumferential direction X of the circumferential wall 211 is: first groove 2141 - second groove 2142 - first groove 2141 - second groove 2142 - first groove 2141 - second groove 2142.

The residual thickness D₁ of the circumferential wall 211 at the first groove 2141 is a minimum thickness of a residual portion after the first groove 2141 is disposed on the circumferential wall 211. The residual thickness D₂ of the circumferential wall 211 at the second groove 2142 is a minimum thickness of a residual portion after the second groove 2142 is disposed on the circumferential wall 211.

In this embodiment of the present application, the second grooves 2142 alternated with the first grooves 2141 are disposed on the circumferential wall 211, the residual thickness D₂ of the circumferential wall 211 at the second groove 2142 is greater than the residual thickness D₁ of the circumferential wall 211 at the first groove 2141, the damage-resistance of the circumferential wall 211 at the second grooves 2142 is greater than that of the circumferential wall 211 at the first grooves 2141, and when pressure or temperature inside the shell 21 reaches the threshold, the circumferential wall 211 will crack along the first grooves 2141 to implement pressure relief. In this case, the circumferential wall 211 does not crack along the second grooves 2142, so the second grooves 2142 can balance deformation of the circumferential wall 211 during formation of the first grooves 2141, which makes the shape of the circumferential wall 211 more regular, improves the assembly quality of the battery cell 20, and prolongs the service life of the battery cell 20 accordingly.

Moreover, the residual thickness D₂ of the circumferential wall 211 at the second groove 2142 is greater than the residual thickness D₁ of the circumferential wall 211 at the first groove 2141, which can improve the structural strength of the shell 21. In addition, after the pressure or temperature inside the shell 21 reaches the threshold and the circumferential wall 211 cracks along the first grooves 2141 for pressure relief, if the pressure or temperature inside the shell 21 continues to increase to a secondary pressure relief threshold, the circumferential wall 211 will continue to crack along the second grooves 2142 to implement secondary pressure relief of the shell 21, thereby improving the safety of the battery cell 20.

In some embodiments, with continued reference to FIG. 5, a depth h₂ of the second groove 2142 is less than a depth h₁ of the first groove 2141, so that the residual thickness D₂ of the circumferential wall 211 at the second groove 2142 is greater than the residual thickness D₁ of the circumferential wall 211 at the first groove 2141.

For example, the circumferential wall 211 has a uniform thickness. Then, the residual thickness D₁ of the circumferential wall 211 at the first groove 2141 is equal to the difference between the thickness F of the circumferential wall 211 and the depth h₁ of the first grooves 2141, and the residual thickness D₂ of the circumferential wall 211 at the second groove 2142 is equal to the difference between the thickness F of the circumferential wall 211 and the depth h₂ of the second groove 2142.

In this embodiment, the depth of the second groove 2142 is less than that of the first groove 2141, so that the residual thickness D₂ of the circumferential wall 211 at the second groove 2142 is greater than the residual thickness D₁ of the circumferential wall 211 at the first groove 2141 in a simple implementation manner. Moreover, because the depth h₂ of the second groove 2142 is less than the depth h₁ of the first groove 2141, the difficulty in forming the second groove 2142 can be effectively reduced.

In some embodiments, with continued reference to FIG. 5, a width L₁ of the first groove 2141 is less than a width L₂ of the second groove 2142.

In this embodiment, the first groove 2141 is narrow and deep, and the second groove 2142 is wide and shallow, resulting in a substantially consistent amount of material removal when the first groove 2141 and the second groove 2142 are formed on the circumferential wall 211, so that the stress on the circumferential wall 211 is similar when the first groove 2141 and the second groove 2142 are formed, the deformation of the circumferential wall 211 is reduced, the shape of the circumferential wall 211 is more regular, and the assembly quality of the battery cell 20 is improved.

In some embodiments, a difference between the residual thickness D₂ of the circumferential wall 211 at the second groove 2142 and the residual thickness D₁ of the circumferential wall 211 at the first groove 2141 is not less than 0.01 mm, namely, D₂-D₁≥ 0.01mm.

A too small difference between the residual thickness D₂ of the circumferential wall 211 at the second groove 2142 and the residual thickness D₁ of the circumferential wall 211 at the first groove 2141 may cause simultaneous pressure relief of the circumferential wall 211 at the first groove 2141 and the second groove 2142.

Therefore, in this embodiment, the difference between the residual thickness D₂ of the circumferential wall 211 at the second groove 2142 and the residual thickness D₁ of the circumferential wall 211 at the first groove 2141 is set within a reasonable range to reduce the risk of simultaneous pressure relief by the circumferential wall 211 at the first groove 2141 and the second groove 2142.

In some embodiments, in the groove group 214, the total number of the first grooves 2141 and the second grooves 2142 is N, and an angle between the adjacent first groove 2141 and second groove 2142 is 360°/N.

As shown in FIG. 5, the total number of the first grooves 2141 and the second grooves 2142 in the groove group 214 is 6 as an example. It may be understood that there are three first grooves 2141 and three second grooves 2142, and the angle between the adjacent first groove 2141 and second groove 2142 is 60°.

In this embodiment, the first grooves 2141 and the second grooves 2142 are uniformly arranged on the circumferential wall 211, and the stress is uniform when the first grooves 2141 and the second grooves 2142 are machined on the circumferential wall 211, so that the shape of the circumferential wall 211 is more regular to improve the assembly quality of the battery cell 20.

In some embodiments, with continued reference to FIG. 5, the first groove 2141 and/or the second groove 2142 are disposed on the outer surface of the circumferential wall 211. This reduces the difficulty in forming the first groove 2141 and/or the second groove 2142.

In some embodiments, refer to FIG. 6. FIG. 6 is a partially enlarged view of position B of the shell 21 shown in FIG. 4. The circumferential wall 211 has a pressure relief portion 2111, the first groove 2141 defines the pressure relief portion 2111, and the pressure relief portion 2111 is configured to open with the first groove 2141 as a boundary when the pressure or temperature inside the shell 21 reaches the threshold, so as to relieve the pressure inside the shell 21.

The pressure relief portion 2111 is an area defined by the first groove 2141 on the circumferential wall 211, and the first groove 2141 is located at an edge of the pressure relief portion 2111.

When the pressure or temperature inside the shell 21 reaches the threshold, the pressure relief portion 2111 will open with the first groove 2141 as the boundary, an opening portion will be formed at a position corresponding to the pressure relief portion 2111 on the circumferential wall 211, and emissions inside the shell 21 will be discharged through the opening portion, with a large pressure relief area, whereby the emissions can be quickly discharged out of the shell 21 to improve the pressure relief rate.

In some embodiments, with continued reference to FIG. 6, the first groove 2141 is an unclosed groove with a distance between two ends.

For example, the contour of the first groove 2141 is U-shaped or C-shaped, the two ends of the first groove 2141 are not connected together but are at a distance, and the first groove 2141 of this structure is the unclosed groove.

When the pressure or temperature inside the shell 21 reaches the threshold, the pressure relief portion 2111 will open outward in a flipping form. After opening, the pressure relief portion 2111 is still partially connected to other portions of the circumferential wall 211 except the pressure relief portion 2111, so that the pressure relief portion 2111 will not detach and fly out due to the quick discharge of the emissions.

In some embodiments, with continued reference to FIG. 6, the first groove 2141 includes a first groove portion 2141a, a second groove portion and a third groove portion 2141b, the first groove portion 2141a and the third groove portion 2141b are opposite in the extension direction Z of the circumferential wall 211, and the first groove portion 2141a, the second groove portion and the third groove portion 2141b are connected sequentially to define the pressure relief portion 2111.

Both the first groove portion 2141a and the third groove portion 2141b extend in the circumferential direction X of the circumferential wall 211 (as shown in FIG. 5), and the second groove portion may be a straight groove extending in the extension direction Z of the circumferential wall 211, or a non-straight groove, such as an arc groove.

It may be understood that, in this embodiment, the contour of the first groove 2141 is roughly U-shaped, so the structure of the first groove 2141 is simple. When the pressure or temperature inside the shell 21 reaches the threshold, the circumferential wall 211 cracks along the second groove portion and then cracks along the first groove portion 2141a and the third groove portion 2141b, so that the pressure relief portion 2111 gradually flips and opens outward, with a large pressure relief area.

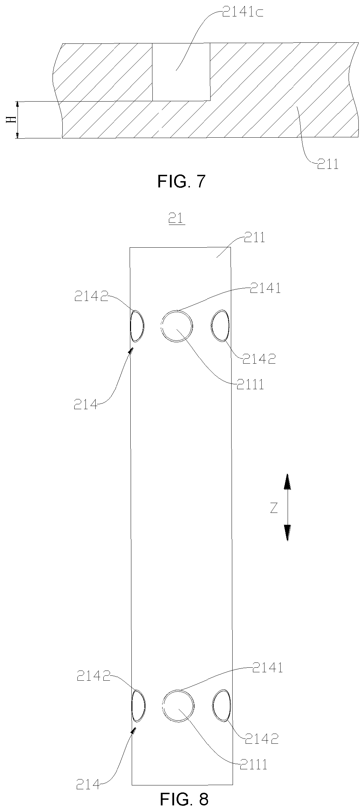

In some embodiments, refer to FIGs. 6 and 7, where FIG. 7 is a cross-sectional view taken along line C-C on the shell 21 shown in FIG. 6. The second groove portion includes a straight groove segment 2141c extending along a straight trajectory, and the first groove portion 2141a is opposite to the third groove portion 2141b in the extension direction of the straight groove segment 2141c. A length of the straight groove segment 2141c is L, and a residual thickness of the circumferential wall 211 at the straight groove segment 2141c is H, satisfying: 1/5*H+1/2*L>0.55.

For example, the residual thickness H of the circumferential wall 211 at the straight groove segment 2141c is equal to the residual thickness D₁ of the circumferential wall 211 at the first groove 2141.

For example, L≤10 mm, and H≤0.4 mm.

In this embodiment, the length L of the straight groove segment 2141c and the residual thickness H of the circumferential wall 211 at the straight groove segment 2141c satisfy a relationship, so that the shell 21 meets pressure relief requirements, where magnitudes of H and L may be set according to actual process situations. For example, when H needs to be larger, L may be smaller.

Optionally, 1/5*H+1/2*L=34/15. In this case, the shell 21 has better pressure relief effect.

In some embodiments, with continued reference to FIG. 6, the second groove portion further includes a first arc chamfer segment 2141d and a second arc chamfer segment 2141f, the first arc chamfer segment 2141d is configured to connect the first groove portion 2141a and the straight groove segment 2141c, and the second arc chamfer segment 2141f is configured to connect the second groove portion and the straight groove segment 2141c.

For example, a radius of the first arc chamfer segment 2141d is equal to that of the second arc chamfer segment 2141f. The first groove portion 2141a and the straight groove segment 2141c are both tangent to the first arc chamfer segment 2141d, while the third groove portion 2141b and the straight groove segment 2141c are both tangent to the second arc chamfer segment 2141f.

In this embodiment, the straight groove segment 2141c can transition to the first groove portion 2141a more smoothly by means of the first arc chamfer segment 2141d, and the straight groove segment 2141c can transition to the third groove portion 2141b more smoothly by means of the second arc chamfer segment 2141f, so that the pressure relief portion 2111 flips and opens outward more smoothly.

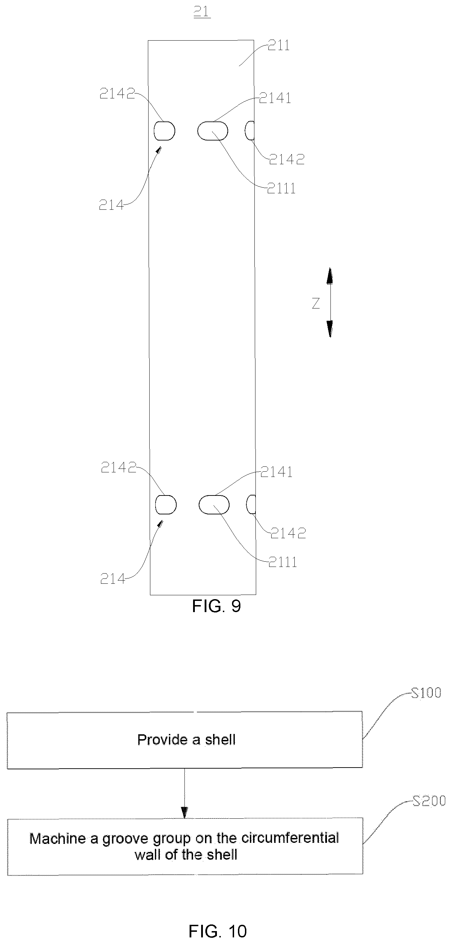

In some embodiments, refer to FIGs. 8 and 9, where FIG. 8 is a schematic structural diagram of a shell 21 according to other embodiments of the present application, and FIG. 9 is a schematic structural diagram of a shell 21 according to still other embodiments of the present application. The first groove 2141 is a closed groove with two connected ends. In this case, when the pressure or temperature inside the shell 21 reaches the threshold, the pressure relief portion 2111 will completely detach from other portions of the circumferential wall 211 except the pressure relief portion 2111, and will have a larger pressure relief area.

In some embodiments, the contour of the first groove 2141 is circular or elliptical.

In FIG. 8, the contour of the first groove 2141 is circular; and in FIG. 9, the contour of the first groove 2141 is elliptical.

In this embodiment, the circular or elliptical first groove 2141 has a simple structure and is easy to form.

In other embodiments, the first groove 2141 may alternatively be a closed groove in other shapes, for example, the contour of the first groove 2141 is polygonal.

In some embodiments, with reference to FIGs. 4, 8 and 9, the contour of the second groove 2142 is in the same shape as the first groove 2141.

Understandably, as shown in FIG. 4, if the first groove 2141 is a non-closed groove, the second groove 2142 is also a non-closed groove. For example, the contour of the first groove 2141 is U-shaped, and the contour of the second groove 2142 is also U-shaped. As shown in FIG. 8, if the first groove 2141 is a closed groove, the second groove 2142 is also a closed groove. For example, the contour of the first groove 2141 is circular, and the contour of the second groove 2142 is also circular.

In this embodiment, the contour of the second groove 2142 is in the same shape as the first groove 2141, so that the formation of the second groove 2142 can better balance the deformation of the circumferential wall 211 during the formation of the first groove 2141, which makes the shape of the circumferential wall 211 more regular.

In some embodiments, with continued reference to FIGs. 4, 8 and 9, a plurality of groove groups 214 are disposed on the circumferential wall 211, and the plurality of groove groups 214 are arranged in the extension direction Z of the circumferential wall 211.

There may be two, three, four, or more groove groups 214 on the circumferential wall 211. For example, in FIGs. 4, 8 and 9, there are two groove groups 214 on the circumferential wall 211.

In this embodiment, the plurality of groove groups 214 are disposed on the circumferential wall 211 to improve the pressure relief capacity of the shell 21, so that the shell 21 can relieve pressure from more positions when its internal pressure or temperature reaches the threshold to increase the pressure relief rate.

In some embodiments, the circumferential wall 211 is cylindrical.

Understandably, the shell 21 is of a cylindrical structure suitable for a cylindrical battery cell.

The second grooves 2142 are disposed on the cylindrical circumferential wall 211, and the second grooves 2142 are alternated with the first grooves 2141, which can improve the roundness of the circumferential wall 211, ensure size requirements of the electrode assembly 22 entering the shell, and improve the assembly quality of the battery cell 20 accordingly.

Moreover, in the embodiment where the first groove portion 2141a, the second groove portion and the third groove portion 2141b of the first groove 2141 are sequentially connected to define the pressure relief portion 2111, the first groove portion 2141a and the third groove portion 2141b are opposite in the extension direction Z of the circumferential wall 211, and the circumferential wall 211 is cylindrical, so that the pressure relief portion 2111 is in a curved state. After the pressure or temperature inside the shell 21 reaches the threshold and causes the circumferential wall 211 to crack along the first groove 2141, the pressure relief portion 2111 in the curved state is more likely to flip and open outward to relieve the pressure inside the shell 21.

An embodiment of the present application provides a battery cell 20, including an electrode assembly 22 and the shell 21 provided by any of the foregoing embodiments, where the shell 21 is configured for accommodating the electrode assembly 22.

An embodiment of the present application provides a battery 100, including a box 10 and the battery cell 20 provided by any of the foregoing embodiments, where the box 10 is configured for accommodating the battery cell 20.

An embodiment of the present application provides an electrical device, including the battery 100 provided by any of the foregoing embodiments.

The electrical device may be any of the foregoing devices using the battery 100.

With reference to FIGs. 4 and 5, an embodiment of the present application provides a cylindrical shell 21. The shell 21 includes a circumferential wall 211 and two groove groups 214, where the two groove groups 214 are arranged in an extension direction Z of the circumferential wall 211. The groove group 214 includes a plurality of first grooves 2141 disposed on the circumferential wall 211 in a circumferential direction X of the circumferential wall 211, and the circumferential wall 211 is configured to crack along the first grooves 2141 when pressure or temperature inside the shell 21 reaches a threshold to relieve the pressure inside the shell 21. The groove group 214 further includes a plurality of second grooves 2142 disposed on the circumferential wall 211 in the circumferential direction X, the second grooves 2142 are alternated with the first grooves 2141 in the circumferential direction X of the circumferential wall 211, contours of the second groove 2142 and the first groove 2141 are roughly U-shaped, and a residual thickness D₂ of the circumferential wall 211 at the second groove 2142 is greater than a residual thickness D₁ of the circumferential wall 211 at the first groove 2141.

In such a shell 21, the second grooves 2142 alternated with the first grooves 2141 are disposed on the circumferential wall 211, where the second grooves 2142 can balance the deformation of the circumferential wall 211 during the formation of the first grooves 2141, thereby improving the roundness of the circumferential wall 211, ensuring the size requirements of the electrode assembly 22 entering the shell, and improving the assembly quality of the battery cell 20 accordingly.

Refer to FIG. 10. FIG. 10 is a flowchart of a manufacturing method for a shell 21 according to some embodiments of the present application. An embodiment of the present application provides a manufacturing method for a shell 21. The manufacturing method includes:
S100: Provide a shell 21, the shell 21 having a circumferential wall 211; and
S200: Machine a groove group 214 on the circumferential wall 211 of the shell 21.

The groove group 214 includes a plurality of first grooves 2141 and a plurality of second grooves 2142 disposed on the circumferential wall 211 in a circumferential direction X of the circumferential wall 211, the second grooves 2142 are alternated with the first grooves 2141 in the circumferential direction X of the circumferential wall 211, a residual thickness D₂ of the circumferential wall 211 at the second groove 2142 is greater than a residual thickness D₁ of the circumferential wall 211 at the first groove 2141, and the circumferential wall 211 is configured to crack along the first groove 2141 when pressure or temperature inside the shell 21 reaches a threshold to relieve the pressure inside the shell 21.

In some embodiments, step S200 includes: alternately punching the first grooves 2141 and the second grooves 2142 on the circumferential wall 211.

That is, in the process of machining the groove group 214 on the circumferential wall 211, a first groove 2141 may be first punched on the circumferential wall 211, then a second groove 2142 is punched adjacent to the first groove 2141 on the circumferential wall 211, another first groove 2141 is punched adjacent to the second groove 2142 on the circumferential wall 211, and in this order, the first grooves 2141 and the second grooves 2142 are alternately punched on the circumferential wall 211.

It should be noted that the relevant structure of the shell 21 manufactured by the manufacturing method provided in the foregoing embodiment may be referenced to the shell 21 provided in the foregoing embodiments, and will not be further repeated here.

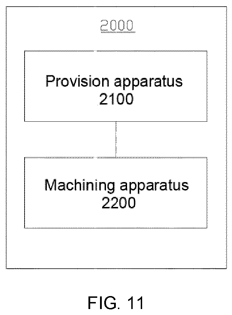

Refer to FIG. 11. FIG. 11 is a schematic block diagram of a manufacturing device 2000 for a shell 21 according to some embodiments of the present application. An embodiment of the present application further provides a manufacturing device 2000 for a shell 21. The manufacturing device 2000 includes a provision apparatus 2100 and a machining apparatus 2200. The provision apparatus 2100 is configured to provide a shell 21, the shell 21 having a circumferential wall 211. The machining apparatus 2200 is configured to machine a groove group 214 on the circumferential wall 211. The groove group 214 includes a plurality of first grooves 2141 and a plurality of second grooves 2142 disposed on the circumferential wall 211 in a circumferential direction X of the circumferential wall 211, the second grooves 2142 are alternated with the first grooves 2141 in the circumferential direction X of the circumferential wall 211, a residual thickness D₂ of the circumferential wall 211 at the second groove 2142 is greater than a residual thickness D₁ of the circumferential wall 211 at the first groove 2141, and the circumferential wall 211 is configured to crack along the first groove 2141 when pressure or temperature inside the shell 21 reaches a threshold to relieve the pressure inside the shell 21.

It should be noted that the relevant structure of the shell 21 manufactured by the manufacturing device 2000 provided in the foregoing embodiment may be referenced to the shell 21 provided in the foregoing embodiments, and will not be further repeated here.

It should be noted that the embodiments in the present application and the features of the embodiments may be combined with each other on a non-conflict basis.

The foregoing embodiments are merely used for illustrating the technical solutions of the present application and are not intended to limit the present application. The subject-matter for which protection is granted is defined by the attached claims.

## Claims

1. A shell for accommodating an electrode assembly, comprising:
a circumferential wall, configured for enclosing the electrode assembly; and
a groove group, comprising a plurality of first grooves disposed on the circumferential wall in a circumferential direction of the circumferential wall, wherein the circumferential wall is configured to crack along the first grooves when pressure or temperature inside the shell reaches a threshold, so as to relieve the pressure inside the shell,
wherein the groove group further comprises a plurality of second grooves disposed on the circumferential wall in the circumferential direction, the second grooves are alternated with the first grooves in the circumferential direction, and a residual thickness of the circumferential wall where the second groove is located is greater than that of the circumferential wall where the first groove is located.

2. The shell according to claim 1, wherein a depth of the second groove is less than that of the first groove, so that the residual thickness of the circumferential wall where the second groove is located is greater than that of the circumferential wall where the first groove is located.

3. The shell according to claim 2, wherein a width of the first groove is less than that of the second groove;
and/or, wherein a difference between the residual thickness of the circumferential wall where the second groove is located and the residual thickness of the circumferential wall where the first groove is located is not less than 0.01 mm;
and/or, wherein in the groove group, a total number of the first grooves and the second grooves is N, and an angle between adjacent first groove and second groove is 360°/N;
and/or, wherein the first groove and/or the second groove are disposed on an outer surface of the circumferential wall.

4. The shell according to any one of claims 1-3, wherein the circumferential wall has a pressure relief portion, the pressure relief portion is defined by the first groove defines, and the pressure relief portion is configured to open with the first groove as a boundary when the pressure or temperature inside the shell reaches the threshold, so as to relieve the pressure inside the shell.

5. The shell according to claim 4, wherein the first groove is an unclosed groove with a distance between two ends.

6. The shell according to claim 5, wherein the first groove comprises a first groove portion, a second groove portion, and a third groove portion, the first groove portion and the third groove portion are opposite in an extension direction of the circumferential wall, and the first groove portion, the second groove portion, and the third groove portion are connected sequentially to define the pressure relief portion.

7. The shell according to claim 6, wherein the second groove portion comprises a straight groove segment extending along a straight trajectory, and the first groove portion is opposite to the third groove portion in the extension direction of the straight groove segment; and
a length of the straight groove segment is L, and a residual thickness of the circumferential wall where the straight groove segment is located is H, wherein L≤10 mm and H≤0.4 mm.

8. The shell according to claim 7, wherein the second groove portion further comprises a first arc chamfer segment and a second arc chamfer segment, the first arc chamfer segment is configured to connect the first groove portion and the straight groove segment, and the second arc chamfer segment is configured to connect the second groove portion and the straight groove segment.

9. The shell according to claim 4, wherein the first groove is a closed groove connected end to end;
optionally, wherein a contour of the first groove is circular or elliptical.

10. The shell according to any one of claims 1-9, wherein a contour of the second groove is in the same shape as that of the first groove;
and/or, wherein a plurality of groove groups are disposed on the circumferential wall, and the plurality of groove groups are arranged in the extension direction of the circumferential wall;
and/or, wherein the circumferential wall is cylindrical;
and/or, wherein the shell further comprises:
a bottom wall, located at one end of the circumferential wall and integrally formed with the circumferential wall, wherein the circumferential wall forms an opening at an end opposite to the bottom wall; and
an end cover, configured for covering the opening.

11. A battery cell, comprising:
an electrode assembly; and
the shell according to any one of claims 1-10, wherein the shell is configured for accommodating the electrode assembly.

12. A battery, comprising:
the battery cell according to claim 11; and
a box, configured for accommodating the battery cell.

13. An electrical device, comprising the battery according to claim 12.

14. A manufacturing method for a shell, comprising steps of:
providing a shell, with the shell having a circumferential wall; and
machining a groove group on the circumferential wall,
wherein the groove group comprises a plurality of first grooves and a plurality of second grooves disposed on the circumferential wall in a circumferential direction of the circumferential wall, the second grooves are alternated with the first grooves in the circumferential direction, a residual thickness of the circumferential wall where the second groove is located is greater than a residual thickness of the circumferential wall where the first groove is located, and the circumferential wall is configured to crack along the first groove when pressure or temperature inside the shell reaches a threshold to relieve the pressure inside the shell.

15. The manufacturing method for a shell according to claim 14, wherein the step of machining a groove group on the circumferential wall comprises:
punching the first grooves and the second grooves on the circumferential wall alternately.

## Patentansprüche

1. Hülle zum Aufnehmen einer Elektrodenanordnung, umfassend:
eine Umfangswand, die konfiguriert ist zum Umschließen der Elektrodenanordnung; und
eine Nutgruppe, umfassend eine Vielzahl von ersten Nuten, die an der Umfangswand in einer Umfangsrichtung der Umfangswand angeordnet sind, wobei die Umfangswand konfiguriert ist, um entlang der ersten Nuten zu reißen, wenn der Druck oder die Temperatur innerhalb der Hülle einen Schwellenwert erreicht, um den Druck innerhalb der Hülle zu entlasten,
wobei die Nutgruppe ferner eine Vielzahl von zweiten Nuten umfasst, die an der Umfangswand in der Umfangsrichtung angeordnet sind, wobei sich die zweiten Nuten mit den ersten Nuten in der Umfangsrichtung abwechseln, und wobei eine Restdicke der Umfangswand, in der sich die zweite Nut befindet, größer ist als die der Umfangswand, in der sich die erste Nut befindet.

2. Hülle nach Anspruch 1, wobei eine Tiefe der zweiten Nut geringer ist als die der ersten Nut, so dass die Restdicke der Umfangswand, in der sich die zweite Nut befindet, größer ist als die der Umfangswand, in der sich die erste Nut befindet.

3. Hülle nach Anspruch 2, wobei eine Breite der ersten Nut geringer ist als die der zweiten Nut;
und/oder, wobei eine Differenz zwischen der Restdicke der Umfangswand, in der sich die zweite Nut befindet, und der Restdicke der Umfangswand, in der sich die erste Nut befindet, nicht weniger als 0,01 mm beträgt;
und/oder, wobei in der Nutgruppe eine Gesamtzahl der ersten Nuten und der zweiten Nuten N beträgt und ein Winkel zwischen einer angrenzenden ersten Nut und einer angrenzenden zweiten Nut 360°/N beträgt;
und/oder, wobei die erste Nut und/oder die zweite Nut an einer äußeren Oberfläche der Umfangswand angeordnet sind.

4. Hülle nach einem der Ansprüche 1 bis 3, wobei die Umfangswand einen Druckentlastungsabschnitt aufweist, der Druckentlastungsabschnitt durch die erste Nut definiert ist und der Druckentlastungsabschnitt konfiguriert ist, um sich mit der ersten Nut als Begrenzung zu öffnen, wenn der Druck oder die Temperatur innerhalb der Hülle den Schwellenwert erreicht, um den Druck innerhalb der Hülle zu entlasten.

5. Hülle nach Anspruch 4, wobei die erste Nut eine nicht geschlossene Nut mit einer Entfernung zwischen zwei Enden ist.

6. Hülle nach Anspruch 5, wobei die erste Nut einen ersten Nutabschnitt, einen zweiten Nutabschnitt und einen dritten Nutabschnitt umfasst, wobei der erste Nutabschnitt und der dritte Nutabschnitt in einer Erstreckungsrichtung der Umfangswand einander gegenüberliegen und der erste Nutabschnitt, der zweite Nutabschnitt und der dritte Nutabschnitt nacheinander verbunden sind, um den Druckentlastungsabschnitt zu definieren.

7. Hülle nach Anspruch 6, wobei der zweite Nutabschnitt ein gerades Nutsegment umfasst, das sich entlang einer geraden Bahn erstreckt, und der erste Nutabschnitt dem dritten Nutabschnitt in der Erstreckungsrichtung des geraden Nutsegments gegenüber liegt; und
eine Länge des geraden Nutsegments L ist, und eine Restdicke der Umfangswand, in der sich das gerade Nutsegment befindet, H ist, wobei L≤10 mm und H≤0,4 mm.

8. Hülle nach Anspruch 7, wobei der zweite Nutabschnitt ferner ein erstes Bogenfasensegment und ein zweites Bogenfasensegment umfasst, wobei das erste Bogenfasensegment konfiguriert ist, um den ersten Nutabschnitt und das gerade Nutsegment zu verbinden, und das zweite Bogenfasensegment konfiguriert ist, um den zweiten Nutabschnitt und das gerade Nutsegment zu verbinden.

9. Hülle nach Anspruch 4, wobei die erste Nut eine geschlossene Nut ist, die Ende an Ende verbunden ist;
wobei optional eine Kontur der ersten Nut kreisförmig oder elliptisch ist.

10. Hülle nach einem der Ansprüche 1 bis 9, wobei eine Kontur der zweiten Nut die gleiche Form wie die der ersten Nut hat;
und/oder, wobei eine Vielzahl von Nutgruppen an der Umfangswand angeordnet ist und die Vielzahl von Nutgruppen in der Erstreckungsrichtung der Umfangswand angeordnet ist;
und/oder, wobei die Umfangswand zylindrisch ist;
und/oder, wobei die Hülle ferner umfasst:
eine Bodenwand, die sich an einem Ende der Umfangswand befindet und einstückig mit der Umfangswand ausgebildet ist, wobei die Umfangswand eine Öffnung an einem Ende gegenüber der Bodenwand bildet; und
eine Endabdeckung, die zum Abdecken der Öffnung konfiguriert ist.

11. Batteriezelle, umfassend:
eine Elektrodenanordnung;
und
die Hülle nach einem der Ansprüche 1 bis 10, wobei die Hülle konfiguriert ist zum Aufnehmen der Elektrodenanordnung.

12. Batterie, umfassend:
die Batteriezelle nach Anspruch 11; und
einen Kasten, das konfiguriert ist zum Aufnehmen der Batteriezelle.

13. Elektrische Vorrichtung, umfassend die Batterie nach Anspruch 12.

14. Herstellungsverfahren für eine Hülle, umfassend die Schritte:
Bereitstellen einer Hülle, wobei die Hülle eine Umfangswand
aufweist; und Bearbeiten einer Nutgruppe an der Umfangswand,
wobei die Nutgruppe eine Vielzahl von ersten Nuten und eine Vielzahl von zweiten Nuten umfasst, die an der Umfangswand in einer Umfangsrichtung der Umfangswand angeordnet sind, wobei die zweiten Nuten sich mit den ersten Nuten in der Umfangsrichtung abwechseln, wobei eine Restdicke der Umfangswand, in der sich die zweite Nut befindet, größer ist als eine Restdicke der Umfangswand, in der sich die erste Nut befindet, und wobei die Umfangswand konfiguriert ist, um entlang der ersten Nut zu reißen, wenn der Druck oder die Temperatur innerhalb der Hülle einen Schwellenwert erreicht, um den Druck innerhalb der Hülle zu entlasten.

15. Herstellungsverfahren für eine Hülle nach Anspruch 14, wobei der Schritt des Bearbeitens einer Nutgruppe an der Umfangswand umfasst:
abwechselndes Stanzen der ersten Nuten und der zweiten Nuten an der Umfangswand.

## Revendications

1. Enveloppe destinée à recevoir un ensemble électrode comprenant :
une paroi circonférentielle, conçue pour enfermer l'ensemble électrode ; et
un groupe de rainures, comprenant une pluralité de premières rainures disposées sur la paroi circonférentielle dans une direction circonférentielle de la paroi circonférentielle, la paroi circonférentielle étant conçue pour se fissurer le long des premières rainures quand la pression ou la température à l'intérieur de l'enveloppe atteint un seuil, de sorte à libérer la pression à l'intérieur de l'enveloppe,
dans laquelle le groupe de rainures comprend en outre une pluralité de deuxièmes rainures disposées sur la paroi circonférentielle dans la direction circonférentielle, les deuxièmes rainures sont alternées avec les premières rainures dans la direction circonférentielle, et une épaisseur résiduelle de la paroi circonférentielle là où se situe la deuxième rainure est supérieure à celle de la paroi là où se situe la première rainure.

2. Enveloppe selon la revendication 1, dans laquelle une profondeur de la deuxième rainure est inférieure à celle de la première rainure, de telle sorte que l'épaisseur résiduelle de la paroi circonférentielle là où se situe la deuxième rainure soit supérieure à celle de la paroi circonférentielle là où se situe la première rainure.

3. Enveloppe selon la revendication 2, dans laquelle une largeur de la première rainure est inférieure à celle de la deuxième rainure ;
et/ou, dans laquelle une différence entre l'épaisseur résiduelle de la paroi circonférentielle là où se situe la deuxième rainure et l'épaisseur résiduelle de la paroi circonférentielle là où se situe la première rainure n'est pas inférieure à 0,01 mm ;
et/ou, dans laquelle dans le groupe de rainures, un nombre total des premières rainures et des deuxièmes rainures est N, et un angle entre une première rainure et une deuxième rainure adjacentes est 360°/N ;
et/ou, dans laquelle la première rainure et/ou la deuxième rainure sont disposées sur une surface externe de la paroi circonférentielle.

4. Enveloppe selon l'une quelconque des revendications 1 à 3, dans laquelle la paroi circonférentielle comporte une partie de libération de pression, la partie de libération de pression est délimitée par la première rainure, et la partie de libération de pression est conçue pour s'ouvrir avec la première rainure comme limite quand la pression ou la température à l'intérieur de l'enveloppe atteint le seuil, de sorte à libérer la pression à l'intérieur de l'enveloppe.

5. Enveloppe selon la revendication 4, dans laquelle la première rainure est une rainure non fermée dont les deux extrémités sont éloignées l'une de l'autre.

6. Enveloppe selon la revendication 5, dans laquelle la première rainure comprend une première partie de rainure, une deuxième partie de rainure et une troisième partie de rainure, la première partie de rainure et la troisième partie de rainure sont en regard dans une direction d'extension de la paroi circonférentielle, et la première partie de rainure, la deuxième partie de rainure, et la troisième partie de rainure sont reliées en séquence pour délimiter la partie de libération de pression.

7. Enveloppe selon la revendication 6, dans laquelle la deuxième partie de rainure comprend un segment de rainure rectiligne s'étendant le long d'une trajectoire rectiligne, et la première partie de rainure se situe en regard de la troisième partie de rainure dans la direction d'extension du segment de rainure rectiligne ; et
une longueur du segment de rainure rectiligne est L, et une épaisseur résiduelle de la paroi circonférentielle là où se situe le segment de rainure rectiligne est H, avec L≤10 mm et H≤0,4 mm.

8. Enveloppe selon la revendication 7, dans laquelle la deuxième partie de rainure comprend en outre un premier segment de chanfrein en arc et un deuxième segment de chanfrein en arc, le premier segment de chanfrein en arc est conçu pour relier la première partie de rainure et le segment de rainure rectiligne, et le deuxième segment de chanfrein en arc est conçu pour relier la deuxième partie de rainure et le segment de rainure rectiligne.

9. Enveloppe selon la revendication 4, dans laquelle la première rainure est une rainure fermée dont les extrémités sont reliées l'une à l'autre ;
éventuellement, dans laquelle un contour de la première rainure est circulaire ou elliptique.

10. Enveloppe selon l'une quelconque des revendications 1 à 9, dans laquelle un contour de la deuxième rainure a la même forme que celui de la première rainure ;
et/ou, dans laquelle une pluralité de groupes de rainures sont disposés sur la paroi circonférentielle, et la pluralité de groupes de rainures sont agencés dans la direction d'extension de la paroi circonférentielle ;
et/ou, dans laquelle la paroi circonférentielle est cylindrique ;
et/ou, dans laquelle l'enveloppe comprend en outre :
une paroi de fond, située au niveau d'une extrémité de la paroi circonférentielle et formée d'un seul tenant avec la paroi circonférentielle, la paroi circonférentielle formant une ouverture au niveau d'une extrémité opposée à la paroi de fond ; et
un couvercle d'extrémité, conçu pour couvrir l'ouverture.

11. Cellule de batterie, comprenant :
un ensemble électrode ; et
l'enveloppe selon l'une quelconque des revendications 1 à 10, l'enveloppe étant conçue pour recevoir l'ensemble électrode.

12. Batterie, comprenant :
la cellule de batterie selon la revendication 11 , et
une boîte, conçue pour recevoir la cellule de batterie.

13. Dispositif électrique, comprenant la batterie selon la revendication 12.

14. Procédé de fabrication d'une enveloppe, comprenant les étapes consistant à :
fournir une enveloppe, l'enveloppe ayant une paroi circonférentielle ; et
usiner un groupe de rainures dans la paroi circonférentielle,
dans lequel le groupe de rainures comprend une pluralité de premières rainures et une pluralité de deuxièmes rainures disposées sur la paroi circonférentielle dans une direction circonférentielle de la paroi circonférentielle, les deuxièmes rainures sont alternées avec les premières rainures dans la direction circonférentielle, une épaisseur résiduelle de la paroi circonférentielle là où se situe la deuxième rainure est supérieure à une épaisseur résiduelle de la paroi circonférentielle là où se situe la première rainure, et la paroi circonférentielle est conçue pour se fissurer le long de la première rainure quand la pression ou la température à l'intérieur de l'enveloppe atteint un seuil pour libérer la pression à l'intérieur de l'enveloppe.

15. Procédé de fabrication d'une enveloppe selon la revendication 14, dans lequel l'étape consistant à usiner un groupe de rainures sur la paroi circonférentielle comprend l'étape consistant à :
poinçonner les premières rainures et les deuxièmes rainures sur la paroi circonférentielle de manière alternée.
